# EUROPEAN PATENT SPECIFICATION

(11) **EP 0 497 578 B1**
(45) Date of publication and mention of the grant of the patent: **04.12.1996**
(21) Application number: 92300755.3
(22) Date of filing: 29.01.1992
(51) Int. Cl.: G08B 3/10, G08B 5/22

(54) **Method and arrangement for recording message receive time and detecting message recall in a radio pager**
Verfahren und Vorrichtung zur Speicherung der Meldungsankunftszeit und zur Detektierung einer Meldungswiederholung in einem drahtlosen Selektivrufempfänger
Procédé et dispositif pour mémoriser l'instant de réception d'un message et détecter le rappel d'un message dans un récepteur d'appel radio

(30) Priority: 29.01.1991 JP 28095/91
(43) Date of publication of application: 05.08.1992
(73) Proprietor: NEC CORPORATION, Tokyo (JP)
(72) Inventor: Asai, Takayuki, Minato-ku, Tokyo (JP); Kobayashi, Yasunori, Kakegawa-shi Shizuoka (JP)
(74) Representative: Orchard, Oliver John

(56) References cited:
- DE-U- 8 903 233
- US-A- 4 835 777
- MOTOROLA TECHNICAL DEVELOPMENTS vol. 11, October 1990, SCHAUMBURG, ILLINOIS US pages 138 - 139 , XP178668 KUZNICKI ET AL. 'INTELLIGENT "DUPLICATE MESSAGE" PROCESSING'

## Description

The present invention relates to improvements in a radio pager, and more specifically to a method and arrangement by which a message receive time can be recorded and also a message recall can be detected in a radio pager.

A radio pager which is equipped with a display has proven very popular in that a large amount of data can be transmitted at one calling as compared with an old style pager which alerts a person to call a predetermined phone number merely by means of sound and/or flashing light.

A recent trend of multi-functioning a display equipped pager, has realized the following two attractive features. One of which is to acquire a time point at which an identifying (ID) address code is detected at a recipient pager. In more specific terms, a message which follows the ID address code detected, is displayed and simultaneously stored in combination with the time point when the ID address code was received. The message/receive-time data is stored in the form of a single unit of data. Merely for the convenience of description, the time point when the ID address code is detected will be referred to as a message receive time.

The other of the above-mentioned recently proposed two functions, is to demonstrate a recall on the pager display in the event that a fresh or incoming message is found identical with an old one which has been memorized in a pager. This kind of pager function is advantageous in that a new message which is identical with the old one need not to be stored and hence efficient memory usage can be attained.

However, it is not possible to combine the above-mentioned two known pager functions. That is, even if a radio pager receives the same message, the time at which the message is received the second time differs from that of the initial receipt. Hence, as the receive time forms an integral part of the unit of data, it is impossible for the unit of data which results from the recall receipt to be exactly the same as the unit of data which results from the initial receipt. Accordingly, when the first and second message-time data units are compared, a difference will always occur even though there is no change in the message portion of the two units.

Accordingly, if the message receive time function is utilized, recall detection is not possible and vice versa.

Motorola Technical Developments, vol. 11, October 1990, Schaumburg, Illinois, US; pages 138, 139, XP 000178668; Kuznicki et al.: "Intelligent "Duplicate Message" Processing" proposes registering messages as duplicates or recalls by timing events in received time-referenced signals.

Features of methods and arrangements to be described below by way of example are that both the recordation of message receive time and the message recall can be simultaneously achieved in a pager.

In a particular embodiment, to be described below as an example there is an arrangement in which the receipt of an ID address code is determined, and the time at which the ID address code is received is set as a new receive time. The new message which follows the ID address code is compared with a message previously stored in a memory and, the new message and new receive time are set in memory in the event that the new message and the previously stored one are not the same. On the other hand, in the event that the two messages are found to match, the receive time at which the old message stored in memory was received is replaced with the new receive time. Alternatively, both the new and old receive times are stored and displayed.

One aspect of a particular method of recording a message and checking a recall in a radio pager to be described as an example includes the steps of: (a) determining the receipt of an ID address code; (b) determining the time at which the ID address code is received and setting this time as a new receive time; (c) comparing a new message which follows the ID address code with a message previously stored in a memory; (d) storing the new message following the ID address code and the new receive time in the memory in the event that the new message and the previously stored message are not the same; and (e) storing the new receive time in the memory in the event that the message following the ID address code is the same as the message previously stored in the memory.

Another aspect of a method of recording a message and checking a recall in a radio pager to be described as an example includes: (a) determining the receipt of an ID address code; (b) determining the time at which the ID address code is received and setting this time as a new receive time: (c) comparing a new message which follows the ID address code with a message previously stored in a memory; (d) storing the message following the ID address code and the new receive time in memory in the event that the new message and the previously stored message are not the same; and (e) replacing the receive time at which the message stored in memory was received with the new receive time in the event that the message following the ID address code is the same as the message previously stored in the memory.

Yet another aspect of a method of recording a message and checking a recall in a radio pager to be described below as an example includes: (a) determining the receipt of an ID address code; (b) determining the time at which the ID address code is received and setting this time as a new receive time; (c) comparing a new message which follows the ID address code with a message previously stored in a memory; (d) storing the message following the ID address code and the new receive time in memory in the event that the new message and the previously stored message are not the same; and (e) storing the new receive time and the previously recorded receive time in the memory in the event that the message following the ID address code is the same as the previously recorded message, and displaying both receive times along with the previously recorded message.

One aspect of a portable radio pager to be described below by way of example is that it includes means for determining the receipt of an ID address code; means for determining the time at which the ID address code is received and setting this time as a new receive time; means for comparing a new message which follows the ID address code with a message previously stored in a memory; means for storing the message following the ID address code and the new receive time in memory in the event that the new message and the previously stored message are not the same; and means for replacing the receive time at which the message previously stored in the memory was received with the new receive time in the event that the message following the ID address code is the same as the message previously stored in the memory.

Another aspect of a portable radio pager to be described below by way of example is that it includes means for determining the receipt of an ID adress code; means for determining the time at which the ID address code is received and setting this time as a new receive time; means for comparing a new message which follows the ID address code with a message previously stored in a memory; means for storing the message following the ID address code and the new receive time in the memory in the event that the new message and the previously stored message in the memory are not the same; and means for storing the new receive time in addition to the previously recorded receive time in the memory in the event that the message following the ID address code is the same as the previously recorded message, and displaying both receive times along with the previously recorded message

### BRIEF DESCRIPTION OF THE DRAWINGS

The features and advantages of the present invention will become more clearly appreciated from the following description taken in conjunction with the accompanying drawings in which like elements are denoted by like reference numerals and in which:
Fig. 1 is a block diagram showing the concept underlying the present invention;
Fig. 2 is a perspective view of a pager to which the present invention is applicable;
Fig. 3 is a block diagram showing details of a hardware arrangement used in the pager of Fig. 2;
Fig. 4 shows the status assumed by the pager display when a pager is switched on;
Figs. 5-7 each is a flowchart for describing the operations which characterizes the first embodiment of the present invention;
Figs. 8-10 each shows the status assumed by the pager display for describing the operations of the first embodiment;
Fig. 11 is a part of flowchart for describing the operations which characterized the second embodiment of the present invention; and
Fig. 12 shows the status assumed by the pager display for describing the operations of the second embodiment.

### DETAILED DESCRIPTION OF THE PREFERRED EMBODIMENTS

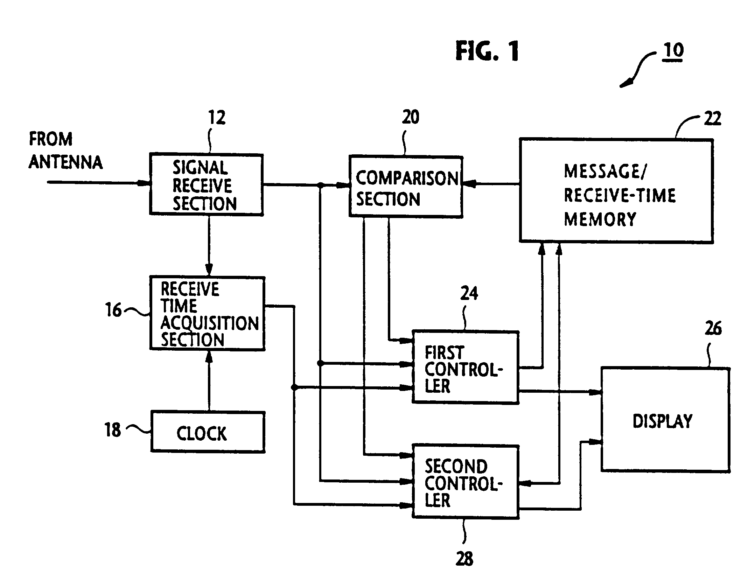

Before referring to the preferred embodiments of the present invention per se it is deemed advantageous to briefly discuss a concept underlying the present invention with reference to Fig. 1.

As shown in Fig. 1, a radio pager 10 includes a signal receive section 12 to which a code-modulated carrier wave is applied via an antenna (not shown). The receive section 12 amplifies the carrier wave and demodulates same. Following this, section 12 compares the ID address code obtained via demodulation with a subscriber's unique code prestored in the pager 10. In the event that the ID address code coincides with the subscriber's unique code, the signal receive section 12 allows a receive time acquisition section 16 to obtain a message receive time from a clock 18. At the same time, the signal receive section 12 supplies a comparison section 20 with a message data which follows the ID address code. The comparison section 20 is also supplied with a message data(s) stored in a message/receive-time memory 22. In the event that the comparison section 20 fails to detect coincidence of the incoming message data with the previously stored message data, the comparison section 20 instructs a first controller 24 to fetch the incoming message data from the section 12 along with the message receive time from the section 16. Subsequently, the first controller 24 displays the incoming message data and the receive time on a display 26 such as a liquid crystal display (LCD), and simultaneously stores the combined data into the memory 22.

On the other hand, if the comparison section 20 detects that the incoming message data from the section 12 coincides with the message data stored in the memory 22, the comparison section 20 applies the data specifying the memory location including the coincide message in the memory 22 to a second controller 28. In response to the data from the comparison section 20, the second controller 28 erases the coincide message and the receive time both stored in the memory 22. Following this, the second controller 28 stores the incoming message and the newly acquired receive time in the memory 22 and thus updating the message receive time. Further, the second controller 28 retrieves the data stored in the memory 22 and then displays the message data, the updated receive time and the recall mark on the display 26.

As an alternative, the second controller 28 may be arranged to rewrite the old message receive time by the new one. In this instance, the second controller 28 needs not to receive the message from the signal receive section 12 and thus a data line, which extends from the section 12 to the second controller 28, can be omitted.

The second controller 28 can be modified such that the new message receive time is added to the previous receive time. In this case, the second controller 28 retrieves the data stored in the memory 22 and then displays the message data, the new and old receive times and the recall mark on the display 26.

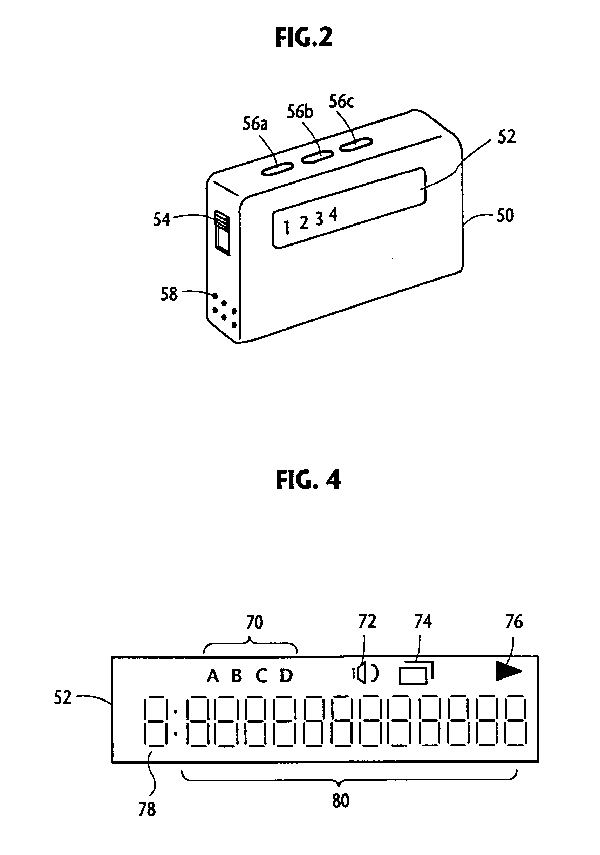

A first embodiment of the present invention will be described with reference to Figs. 2-10.

Fig. 2 is a schematic perspective view of one example of a radio pager, denoted by numeral 50, to which the present invention is applicable. As shown, the pager 50 is equipped with a display 52 on the front face, a power switch 54 on a side edge, and three control switches 56a-56c along the top edge. A plurality of small apertures 58 are provided to facilitate the emission of an audible signal from a speaker (not shown).

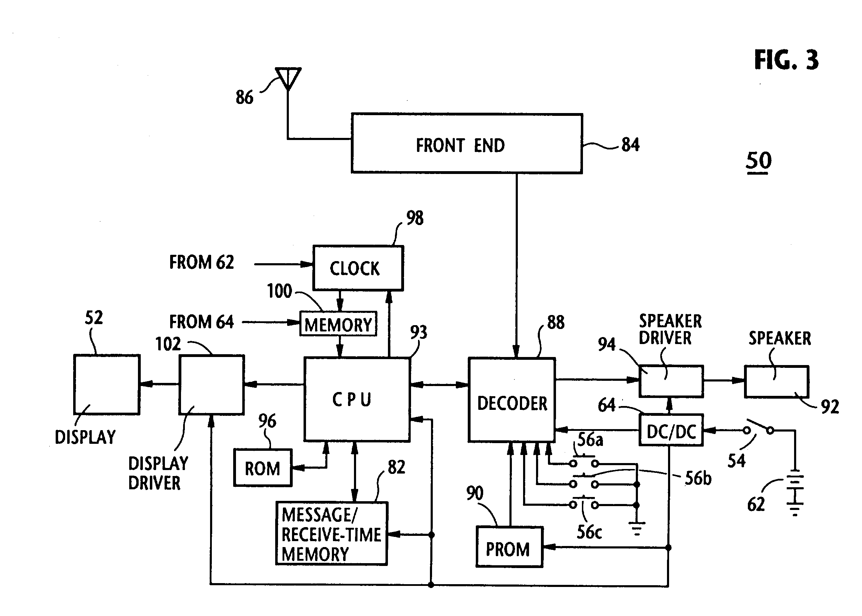

Fig. 3 shows schematically a hardware arrangement of the pager 50 of Fig. 2.

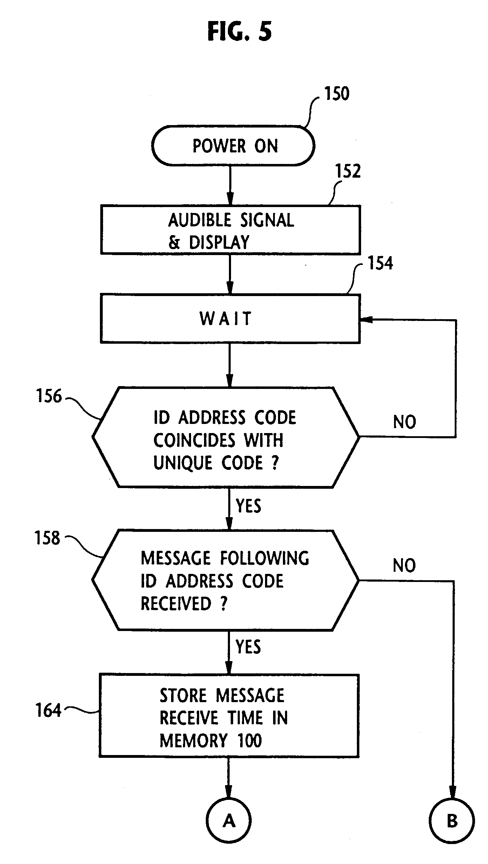

In Fig. 3, when the power switch 54 (also shown in Fig. 2) is set to the ON position, a DC (Direct Current) voltage is applied to a DC/DC converter 64 from a battery 62. Upon energizing the pager 50 via the switch 54, a speaker 92 is energized and the display 52 initially exhibits all the characters and marks which can be shown on the display 52 (see Fig. 4). The initial display shown in Fig. 4 includes four characters A, B, C and D (denoted by numeral 70) which indicate four alert tones selectable by a pager subscriber (for example), a speaker mark or icon 72 appearing while alerting a subscriber immediately after a message is received. A recall mark 74 is used to indicate the occurrence of the receipt of the same message more than once, and a scroll mark 76 which indicates that a further message follows on the subsequent "page(s)". One digit mark 78 represents a message No. stored in a message memory 82 (Fig. 3). The mark 78 indicates the order of the receipt of the messages stored in a message/receive-time memory 82. Lastly, 12-digit numerals 80 are used for exhibiting a receive message and/or a receive time(s). In the initial display shown in Fig. 4, the characters 78, 80 are shown by number "8" in this particular case. The initial display disappears automatically after a predetermined time has elapsed or in response to the switch 56a (Figs. 2 and 3) being pressed.

Returning to Fig. 3, a front end 84 is provided for amplifying and demodulating a code-modulated carrier wave received by an antenna 86. This front end circuit 84 is conventional in arrangement and comprises a high frequency amplifier, a frequency converter, an IF amplifier, and a discriminator although not shown in Fig. 3. The output of the front end 84 is applied to a decoder 88 which searches for an ID address code prestored in a PROM (Programmable Read Only Memory) 90. In the event that the ID address code coincides with the subscriber's unique code, the decoder 88 informs a CPU (Central Processing Unit) 93 of the coincidence and simultaneously energizes a speaker 92 by way of a speaker driver 94. Although not shown in Fig. 3, a light source such as an LED (Light Emitting Diode) may be installed to provide a visible signal in parallel with the audible signal from the speaker 92.

The CPU 93 controls the overall operations of the pager 50 using a program which is prestored in a ROM 96.

When the CPU 93 is advised that the decoder 88 has determined that a coincidence exists between the ID address code and the subscriber's unique code, the CPU 93 accesses the clock 98 and causes the time to written to memory 100. This records the time at which the message was received. The operations of the CPU 93, which are directly concerned with the present invention, will be discussed later. When the display of information is needed, the CPU 93 activates a display driver 102 and exhibits same on the display 52.

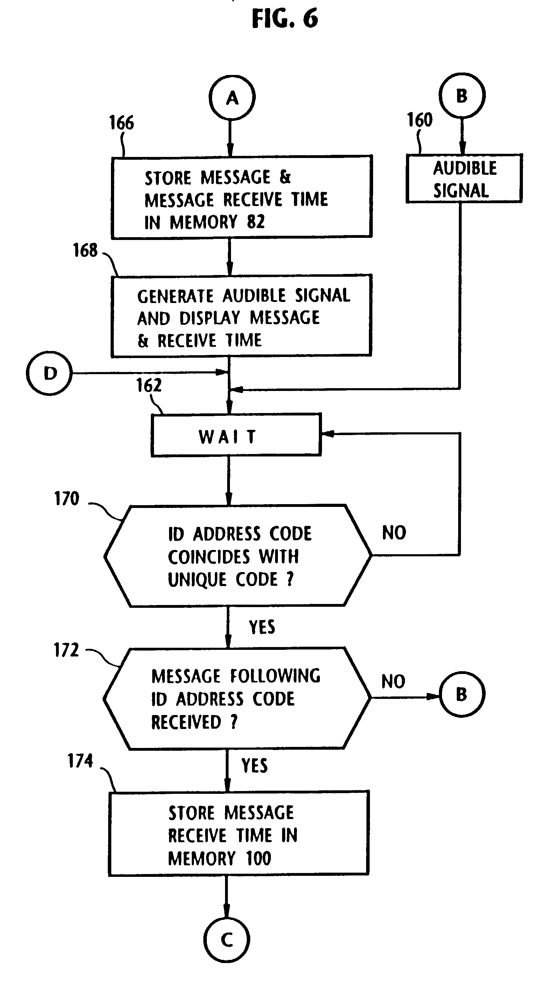

The operation of the first embodiment will now be given mainly with reference to Figs. 5-7. Following the pager being switched on (step 150), the pager responds by generating an audible signal and inducing the display to assume the condition illustrated in Fig. 4 (step 152). This initial display continues for a predetermined time duration or disappears by pressing the switch 56a. The pager then enters a waiting loop (steps 154-156) until such time as an ID address code is found to coincide with the subscriber's unique code. Upon a coincidence being established, the pager control is such as to proceed to step 158 wherein it is determined if a message follows the ID address code or not. In the event of a negative outcome (no message) the pager control goes to step 160 (Fig. 6) wherein a command to issue an audible signal is issued which continues for a preset time duration or 5 ceases by pressing the switch 56a. Following this, in step 162 the routine enters a second waiting loop.

However, in the event of a positive indication at step 158 the pager control goes to step 164 wherein the time at which the message is received (viz., the message receive time) is set in memory 100. Following this in step 166 the message and the message receive time are set in memory 82. After this an audible signal is generated and the message is displayed along with the receive time, after which the wait loop (steps 162-170) is entered until a next ID address code is received that corresponds to the subscriber's unique code (step 172). If a message follows the ID address code, processing continues with step 174 in which the receive time is stored in memory 100, similar to step 164, then processing continues with step 176.

In the event that the pager is set up so that when the pager is switched OFF the content of the memory 82 is not lost, each time the power switch 54 is subsequently set to the ON state, the pager control will proceed directly from step 152 to step 162.

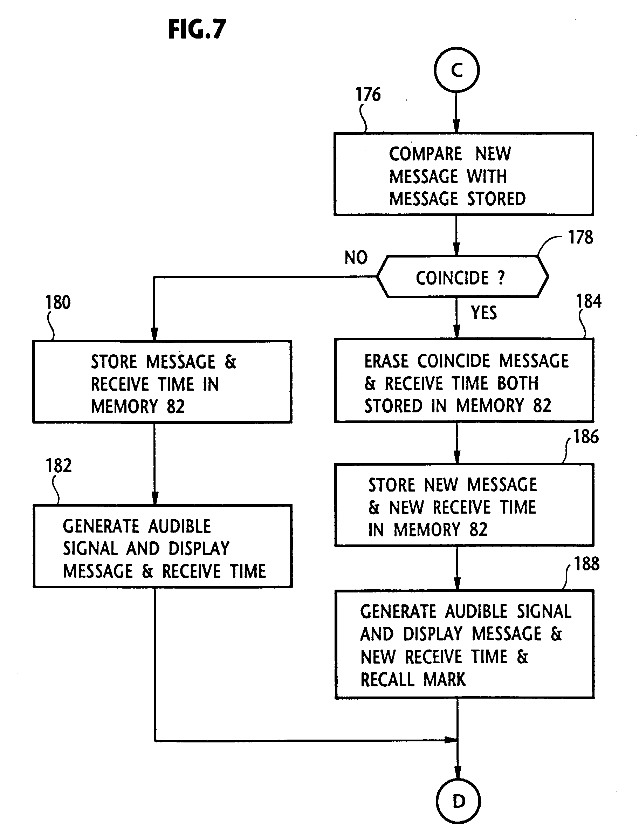

At step 176 (Fig. 7) an incoming message is compared with stored message or sequentially with a plurality of stored messages (in the event that more than one is currently resident in memory 82). In the event of the absence of a coincidence the pager control is such as to proceed to step 180 wherein newly received message and the message receive time are set in memory 82. Following this, an audible signal is issued and the message is generated on the display 52. Following this, the control loops back to step 162.

However, at step 178 in the event that message coincidence is determined, the pager control proceeds to step 184 wherein the stored coincide message and the corresponding previously stored receive time are erased from memory 82. Following this, the new message and the new receive time are stored in the memory 82 (step 186) and thus the old receive time is updated or replaced. Alternatively, it is within the scope of the present invention to merely replace the previously received (viz., old) time with the new receive time without processing the above-mentioned data erasing operation.

At step 188 an audible signal is again generated and the coincide message and the new receive time retrieved from the memory 82 are displayed together with the recall mark.

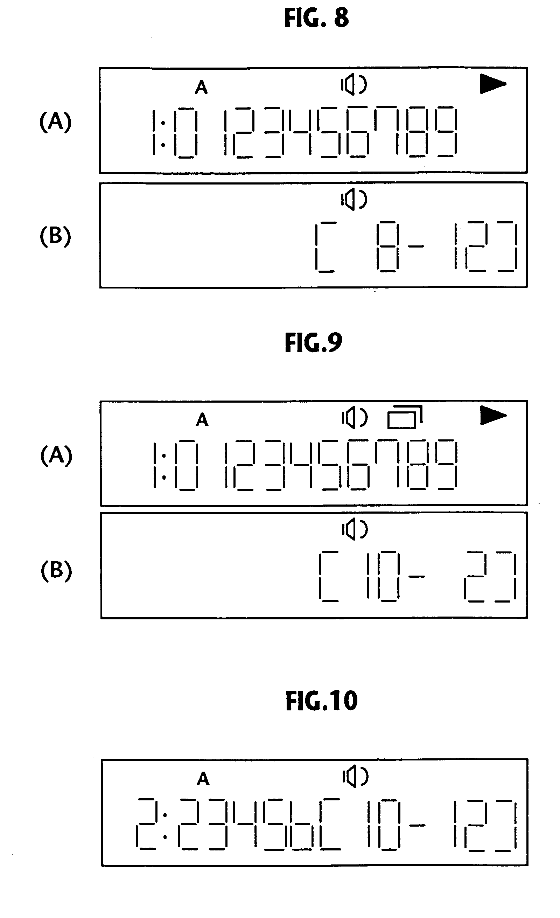

In Fig. 8 an example of the image which is generated on the pager display 52 (Figs. 2 and 3) in response to the execution of step 168 is shown. In the example shown at a portion (A) of Fig. 8, the first page displays a message data (viz., 0123456789). The first digit 78 of the display (see Fig. 4) represents that the message data shown is the first one. As will be noted the scroll marker 76 is shown indicating that a second "page" exists. The second page (portion (B) of Fig. 8) indicates that the message was received at 8:12. The scroll is implemented by pressing the switch 56b.

Fig. 9 shows, at portions (A) and (B), respectively the first and second pages which result from step 188. As will be appreciated, the first message remains the same while the receive time is changed to 10:2. Further, as shown on the first page, the recall mark is additionally displayed.

Fig. 10 shows the message data which is displayed as a result of the pager control passing through step 182. As will be appreciated, in this instance a new message (viz., 23456) is displayed as message No.2. Further, as the message data is relatively brief in this case, the receive time of 10:12 is also displayed on the same page.

The information of the various marks, such as the tone indicating character, the recall mark and the speaker mark, are stored in a control memory section logically combined with the corresponding message/receive-time data stored in the memory 82.

The message and the receive time stored in the memory 82 can be displayed at any time when the switch 56c is pressed.

The second embodiment differs from the first in that instead of replacing the old receive time with the new one, the new one is added to the old one. Viz., a further page is added and the new receive time is shown on page 2 while the old time is displayed on page 3.

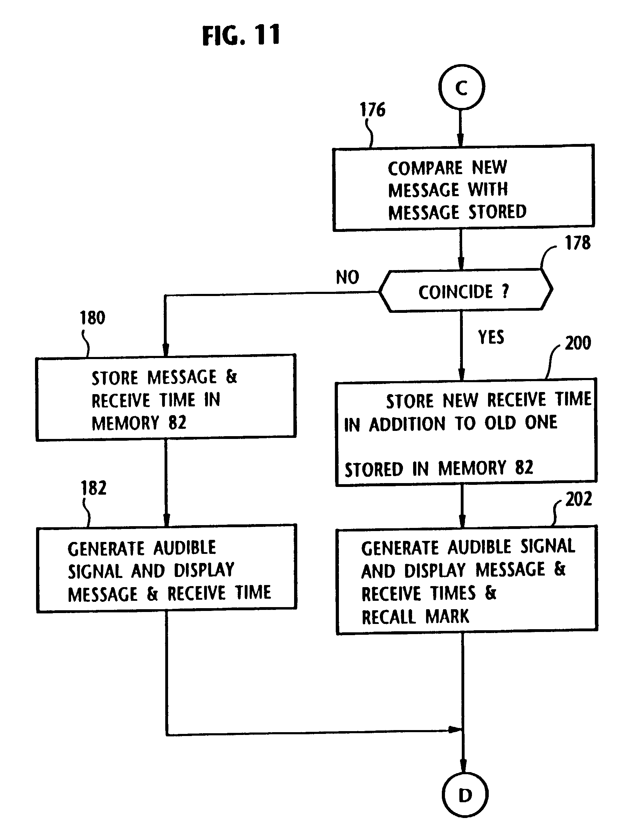

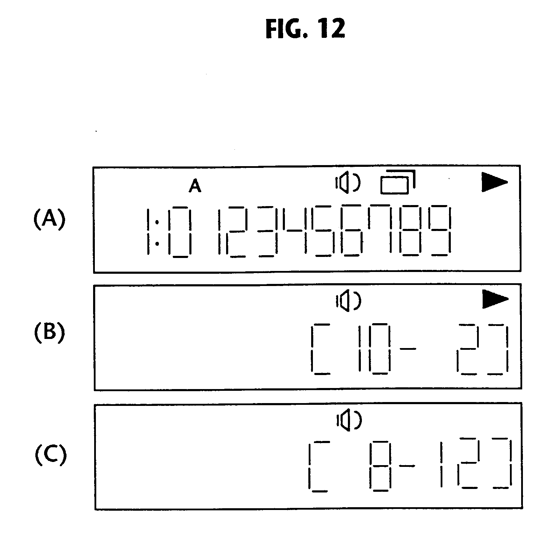

The second embodiment will further be discussed with reference to Figs. 11 and 12. The flowchart of Fig. 11 differs from that of Fig. 7 in that the former flowchart includes two steps 200, 202 in place of steps 184, 186 and 188. The remaining steps of Fig. 11 are identical with the corresponding ones of Fig. 7 and hence further descriptions thereof will be omitted for the sake of brevity.

In the event that message coincidence is determined at step 178, the pager control proceeds to step 200 wherein the fresh receive time is added to the old time stored in the memory 82. Following this, at step 202 an audible signal is generated and the coincide message and the new and old receive times retrieved from the memory 82 are displayed together with the recall mark.

Fig. 12 shows, at portions (A)-(C) thereof, respectively the first to third pages which result from step 202. As will be appreciated, the first message indicates an initially received message data while the second and third pages indicate new and old receive times (viz., 10:2 and 8:12). The recall mark is displayed on the first page while the scroll mark is attached to both the first and second pages.

While the foregoing description describes two preferred embodiments of present invention, the various alternatives and modifications possible without departing from the scope of the present invention, which is limited only by the appended claims, will be apparent to those skilled in the art.

## Claims

1. A method of recording a message and checking a recall in a radio pager, including the steps of:
(a) determining the receipt of an ID (identifying) address code;
(b) determining the time at which the ID address code is received and setting this time as a new receive time; and characterized by the steps of:
(c) comparing a new message which follows the ID address code with a message previously stored in a memory;
(d) storing the new message following the ID address code and the new receive time in the memory in the event that the new message and the previously stored message are not the same; and
(e) storing the new receive time in the memory in the event that the message following the ID address code is the same as the message previously stored in the memory.

2. A method as claimed in claim 1, wherein in step (e) the new receive time replaces the receive time at which the message previously stored in the memory was received.

3. A method as claimed in claim 1, wherein in step (e) the new receive time is stored in addition to the receive time at which the message previously stored in the memory was received.

4. A portable radio pager comprising:
means for determining the receipt of an ID (identifying) address code;
means for determining the time at which the ID address code is received and setting this time as a new receive time;
means for comparing a new message which follows the ID address code with a message previously stored in a memory;
means for storing the message following the ID address code and the new receive time in memory in the event that the new message and the previously stored message are not the same; and
means for replacing the receive time at which the message previously stored in the memory was received with the new receive time in the event that the message following the ID address code is the same as the message previously stored in the memory.

5. A portable radio pager comprising:
means for determining the receipt of an ID (identifying) address code;
means for determining the time at which the ID address code is received and setting this time as a new receive time;
means for comparing a new message which follows the ID address code with a message previously stored in a memory;
means for storing the message following the ID address code and the new receive time in the memory in the event that the new message and the previously stored message in the memory are not the same; and
means for storing the new receive time in addition to the previously recorded receive time in the memory in the event that the message following the ID address code is the same as the previously recorded message, and displaying both receive times along with the previously recorded message.

## Patentansprüche

1. Verfahren zum Speichern einer Meldung und Prüfen einer Wiederholung in einem drahtlosen Rufempfänger mit den Schritten:
(a) Feststellen des Empfangs eines ID-(Identifikations)-Adressencodes;
(b) Feststellen der Zeit, zu welcher der ID-Adressencode empfangen wird und Setzen dieser Zeit als eine neue Ankunftszeit; und gekennzeichnet durch die Schritte:
(c) Vergleichen einer neuen Meldung, welche dem ID-Adressencode folgt, mit einer zuvor in einem Speicher gespeicherten Meldung;
(d) Speichern der dem ID-Adressencode folgenden neuen Meldung und der neuen Ankunftszeit in dem Speicher in dem Falle, daß die neue Meldung und die zuvor gespeicherte Meldung nicht dieselben sind; und
(e) Speichern der neuen Ankunftszeit in dem Speicher in dem Falle, daß die dem ID-Adressencode folgende Meldung dieselbe wie die zuvor in dem Speicher gespeicherte Meldung ist.

2. Verfahren nach Anspruch 1, wobei in Schritt (e) die neue Ankunftszeit die Ankunftszeit ersetzt, bei welcher die zuvor in dem Speicher gespeicherte Meldung empfangen wurde.

3. Verfahren nach Anspruch 1, wobei in Schritt (e) die neue Ankunftszeit zusätzlich zu der Ankunftszeit gespeichert wird, bei welcher die zuvor in dem Speicher gespeicherte Meldung empfangen wurde.

4. Tragbarer drahtloser Rufempfänger mit:
einer Einrichtung für die Feststellung der Ankunft eines ID-(Identifikations)-Adressencodes;
einer Einrichtung zum Feststellen der Zeit, zu welcher des ID-Adressencode empfangen wird, und zum Setzen dieser Zeit als neue Ankunftszeit;
einer Einrichtung zum Vergleichen einer neuen Meldung, welche dem ID-Adressencode folgt, mit einer zuvor in einem Speicher gespeicherten Meldung;
einer Einrichtung zum Speichern der dem ID-Adressencode folgenden Meldung und der neuen Ankunftszeit in einem Speicher in dem Falle, daß die neue Meldung und die zuvor gespeicherte Meldung nicht dieselben sind; und
einer Einrichtung zum Ersetzen der Ankunftszeit, bei welcher die zuvor in dem Speicher gespeicherte Meldung empfangen wurde, durch die neue Ankunftszeit in dem Falle, daß die dem ID-Adressencode folgende Meldung dieselbe wie die zuvor in dem Speicher gespeicherte Meldung ist.

5. Tragbarer drahtloser Rufempfänger mit:
einer Einrichtung für die Feststellung der Ankunft eines ID-(Identifikations)-Adressencodes;
einer Einrichtung zum Feststellen der Zeit, zu welcher der ID-Adressencode empfangen wird und zum Setzen dieser Zeit als neue Ankunftszeit;
einer Einrichtung zum Vergleichen einer neuen Meldung, welche dem ID-Adressencode folgt, mit einer zuvor in einem Speicher gespeicherten Meldung;
einer Einrichtung zum Speichern der dem ID-Adressencode folgenden Meldung und der neuen Ankunftszeit in dem Speicher in dem Falle, daß die neue Meldung und die zuvor gespeicherte Meldung nicht dieselben sind; und
einer Einrichtung zum Speichern der neuen Ankunftszeit zusätzlich zu der zuvor in dem Speicher gespeicherten Ankunftszeit in dem Falle, daß die dem ID-Adressencode folgende Meldung dieselbe wie die zuvor in dem Speicher gespeicherte Meldung ist, und zum Anzeigen beider Ankunftszeiten zusammen mit der zuvor gespeicherten Meldung.

## Revendications

1. Procédé d'enregistrement d'un message et de vérification d'un rappel dans un récepteur d'appel radio, comprenant les étapes suivantes de :
(a) détermination de la réception d'un code d'adresse d'identification (ID) ;
(b) détermination du moment auquel le code d'adresse d'identification est reçu et la fixation de ce moment en tant que nouvel instant de réception ; et caractérisé par les étapes suivantes de :
(c) comparaison d'un nouveau message qui suit le code d'adresse d'identification avec un message précédemment stocké dans une mémoire ;
(d) stockage du nouveau message suivant le code d'adresse d'identification et du nouvel instant de réception dans la mémoire dans l'éventualité où le nouveau message et le message précédemment stocké ne sont pas les mêmes ; et
(e) stockage du nouvel instant de réception dans la mémoire dans l'éventualité où le message suivant le code d'adresse d'identification est le même que le message précédemment stocké dans la mémoire.

2. Procédé selon la revendication 1, dans lequel, dans l'étape (e), le nouvel instant de réception remplace l'instant de réception auquel le message précédemment stocké dans la mémoire a été reçu.

3. Procédé selon la revendication 1, dans lequel, dans l'étape (e), le nouvel instant de réception est stocké en plus de l'instant de réception auquel le message précédemment stocké dans la mémoire a été reçu.

4. Récepteur d'appel radio portable comprenant :
des moyens pour déterminer la réception d'un code d'adresse d'identification ;
des moyens pour déterminer le moment auquel le code d'adresse d'identification est reçu et pour fixer ce moment en tant que nouvel instant de réception ;
des moyens pour comparer un nouveau message qui suit le code d'adresse d'identification avec un message précédemment stocké dans une mémoire ;
des moyens pour stocker le message suivant le code d'adresse d'identification et le nouvel instant de réception dans la mémoire dans l'éventualité où le nouveau message et le message précédemment stocké ne sont pas les mêmes ; et
des moyens pour remplacer l'instant de réception auquel le message précédemment stocké dans la mémoire a été reçu par le nouvel instant de réception dans l'éventualité où le message suivant le code d'adresse d'identification est le même que le message précédemment stocké dans la mémoire.

5. Récepteur d'appel radio portable comprenant :
des moyens pour déterminer la réception d'un code d'adresse d'identification ;
des moyens pour déterminer le moment auquel le code d'adresse d'identification est reçu et pour fixer ce moment en tant que nouvel instant de réception ;
des moyens pour comparer un nouveau message qui suit le code d'adresse d'identification avec un message précédemment stocké dans une mémoire ;
des moyens pour stocker le message suivant le code d'adresse d'identification et le nouvel instant de réception dans la mémoire dans l'éventualité où le nouveau message et le message précédemment stocké ne sont pas les mêmes ; et
des moyens pour stocker le nouvel instant de réception en plus de l'instant de réception précédemment enregistré dans la mémoire dans l'éventualité où le message suivant le code d'adresse d'identification est le même que le message précédemment enregistré, et l'affichage des deux instants de réception en même temps que le message précédemment enregistré.
